(19) Europäisches Patentamt / European Patent Office / Office européen des brevets

(11) **EP 2 392 501 B1**

(12) # EUROPÄISCHE PATENTSCHRIFT

(45) Veröffentlichungstag und Bekanntmachung des Hinweises auf die Patenterteilung:
**10.08.2016** Patentblatt 2016/32

(51) Int Cl.:
**B60W 50/08** *(2012.01)* **B60K 28/06** *(2006.01)*
**B60W 30/12** *(2006.01)*

(21) Anmeldenummer: **11004369.2**

(22) Anmeldetag: **27.05.2011**

(54) **Verfahren zur Steuerung des Betriebs eines vollautomatischen, zur unabhängigen Fahrzeugführung ausgebildeten Fahrerassistenzsystems eines Kraftfahrzeugs und Kraftfahrzeug**

Method for controlling the operation of a fully automatic driver assistance system of a motor vehicle for independent vehicle guidance and motor vehicle

Procédé de commande du fonctionnement d'un système d'assistance au conducteur totalement automatique développé pour guider un véhicule de manière indépendante destiné à un véhicule automobile et véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2010 DE 102010022433**

(43) Veröffentlichungstag der Anmeldung:
**07.12.2011** Patentblatt 2011/49

(73) Patentinhaber: **Audi AG**
**85045 Ingolstadt (DE)**

(72) Erfinder:
• **Hörwick, Markus**
**81379 München (DE)**
• **Wimmer, Martin**
**93047 Regensburg (DE)**
• **Siedersberger, Karl-Heinz, Dr.**
**85049 Ingolstadt (DE)**
• **Ostgathe, Nils**
**85375 Neufahrn (DE)**

(74) Vertreter: **Thielmann, Frank**
**AUDI AG**
**Patentabteilung**
**85045 Ingolstadt (DE)**

(56) Entgegenhaltungen:
DE-A1-102006 056 094    DE-A1-102008 038 816
US-A1- 2005 030 184    US-A1- 2009 287 367

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung des Betriebs eines vollautomatischen, zur unabhängigen Fahrzeugführung ausgebildeten Fahrerassistenzsystems eines Kraftfahrzeugs, bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie, zum Deaktivieren des Fahrerassistenzsystems führt, sowie ein Kraftfahrzeug mit einem solchen Fahrerassistenzsystem.

Im Stand der Technik sind viele Fahrerassistenzsysteme bekannt, bei denen die Fahrzeugführung, also die Längs- bzw. Querregelung, teils durch den Fahrer, teils durch das Fahrerassistenzsystem erfolgt. Beispiele für solche Fahrerassistenzsysteme sind Längsführungssysteme, beispielsweise ACC (automatic cruise control) und Stop-and-Go-Systeme, Querführungssysteme, wie ein Spurmittenführungssystem, oder auch Spurhalteassistenten. Die Verantwortung für die vom Kraftfahrzeug durchgeführten Aktionen und Fahrmanöver liegt bei solchen Fahrerassistenzsystemen weiter beim Fahrer, der das Fahrerassistenzsystem und dessen Handlungen laufend überwacht.

Aktuell richtet sich die Entwicklung von Fahrerassistenzsystemen hauptsächlich auf sogenannte vollautomatische Fahrerassistenzsysteme, die die Fahrzeugführung (innerhalb definierter Grenzen) vollständig übernehmen sollen. Ein entsprechendes Beispiel ist der sogenannte Stauassistent. Diese Systeme haben beispielsweise zum Ziel, dem Fahrer im Stau, also bei Geschwindigkeiten beispielsweise kleiner als 60 km/h, sowohl die Längsführung bezüglich des Vorderfahrzeugs als auch die Querführung innerhalb der eigenen Spur abzunehmen. Ein anderes Beispiel sind automatische Einparksysteme oder dergleichen, letztlich werden jedoch solche vollautomatischen Fahrerassistenzsysteme für verschiedene, auch bei höheren Geschwindigkeiten anzuwendende Fälle entwickelt.

Da vollautomatische Fahrerassistenzsysteme dem Fahrer die komplette Fahraufgabe (Längs- und Querführung) über einen längeren Zeitraum vollständig abnehmen, besteht die Möglichkeit, dass sich der Fahrer nach einiger Zeit von der Fahraufgabe zurückziehen und Nebenbeschäftigungen nachgehen wird. Dies hat zur Folge, dass er im Falle einer sogenannten Fahrerübernahmeaufforderung, wenn also bestimmte Systemgrenzen erreicht sind und der Fahrer selbst wieder die Kontrolle über das Kraftfahrzeug erhalten soll, nicht mehr schnell genug in adäquater Weise reagieren kann, was das Unfallrisiko erhöht. Auf diese Weise würde - anders als bei teilautomatischen Fahrerassistenzsystemen - der Fahrer, da er nicht fahrübernahmebereit ist, nicht mehr als Rückfallebene fungieren können.

Systemgrenzen eines vollautomatischen Fahrerassistenzsystems sollen im Verständnis der vorliegenden Erfindung nicht nur die Funktionsgrenzen, also der der Spezifikation zu entnehmende Einsatzbereich (bei Stauassistenzsystemen beispielsweise die Grenzgeschwindigkeit oder das Verlassen bestimmter Umgebungen, wie beispielsweise einer Autobahn), sein, sondern auch beispielsweise Systemausfälle/Systemfehler oder externe Einflüsse, wie beispielsweise das Öffnen einer Tür durch den Fahrer. Bei allen derartigen Vorgängen, wenn mithin eine Übernahmebedingung erfüllt ist, wird das vollautomatische Fahrerassistenzsystem den Fahrer auffordern, die Fahrzeugführung, also die Längs- bzw. Querregelung, wieder zu übernehmen. Dies kann beispielsweise dadurch erkannt werden, dass der Fahrer das Lenkrad und/oder die Pedalerie betätigt. Dann kann das vollautomatische Fahrerassistenzsystem wieder deaktiviert werden. Üblicherweise wird dem Fahrer bei einer Fahrerübernahmeaufforderung ein entsprechender optischer und/oder akustischer und/oder haptischer Hinweis gegeben, beispielsweise eine deutliche Anzeige auf einer Kombinationsanzeige, eine Sprachansage, ein Vibrieren des Lenkrads oder dergleichen. Ist der Fahrer in einer solchen Situation, insbesondere einer kritischen Situation wie einem Systemausfall oder dergleichen, nicht in der Lage, schnell die Fahrzeugführung wieder zu übernehmen, können Sicherheitsprobleme, insbesondere Unfälle, auftreten. In der nachveröffentlichten DE 10 2009 050 404.4 wurde vorgeschlagen, durch Auswertung von Sensordaten eine kontinuierliche, aktive Überwachung des Fahrers dahingehend zu ermöglichen, ob der Fahrer noch in der Lage ist, hinreichend schnell auf eine Fahrerübernahmeaufforderung zu reagieren, das bedeutet, ob er fahrübernahmebereit ist. Dazu wird aus den Sensordaten ein Zustandswert ermittelt, beispielsweise in Form einer hypothetischen Fahrerreaktionszeit. Es wurde also den oben diskutierten Systemgrenzen die Systemgrenze hinzugefügt, dass der Fahrer fahrübernahmebereit ist.

Dabei wurde dort von einer klassischen Aufteilung in zwei verschiedene Fragenstellungen ausgegangen. Zum einen muss gefragt werden, ob der Fahrer die Verkehrssituation weiterhin aufmerksam verfolgt (sogenannte "situation awareness"). Sehr wichtig ist aber auch, ob denn die motorische Reaktionsfähigkeit des Fahrers, beschrieben durch seine aktuelle Stellung, ausreichend ist. Ist nämlich der Fahrer "im Loop", also in der Lage, die Fahrzeugführung schnell zu übernehmen, führt er letztlich drei Schritte aus. Zunächst erkennt er die Verkehrssituation durch deren Wahrnehmung. Basierend auf dieser Wahrnehmung trifft er eine Entscheidung, wie das Fahrzeug weiterzuführen ist. Diese beiden Punkte werden unter "situation awareness" zusammengefasst. Er muss jedoch auch fähig sein, die entsprechenden Handlungen, die aus der Entscheidung resultieren, umzusetzen. Er muss also motorisch reaktionsfähig sein. Es muss die Fähigkeit vorhanden sein, schnell und aktiv ins Fahrgeschehen einzugreifen.

Die gattungsbildende

US 2009/0287367 A1 betrifft ein Fahrzeugsystem zur Fahrersteuerung für ein wenigstens teilweise autonomes Fahrzeug. Dafür wird ein autonomer Fahrkoordinator genutzt, der auch eine Komponente zur Beurteilung der Aufmerksamkeit des Fahrers aufweisen kann. Eingangsdaten können von einer Kamera stammen.

Die gattungsbildende

US 2005/0030184 A1 offenbart ein Verfahren und eine Anordnung zur Steuerung eines Subsystems eines Fahrzeugs in Abhängigkeit von einem gemessenen Grad an Unaufmerksamkeit des Fahrers. Beispielsweise können Grenzwerte für Müdigkeit und/oder Ablenkung bei Cruise Control-Systemen und/oder Spurhaltesystemen eingesetzt werden.

Der Erfindung liegt daher die Aufgabe zugrunde, ein Steuerungsverfahren für vollautomatische Fahrerassistenzsysteme anzugeben, bei welchem der Fahrer als Rückfallebene erhalten bleibt und somit die Sicherheit erhöht werden kann.

Zur Lösung dieser Aufgabe ist bei einem Verfahren der eingangs genannten Art erfindungsgemäß vorgesehen, dass abhängig von einer Betätigung eines Bedienelements durch den Fahrer ein Aufmerksamkeitspotential auf einen Startwert gesetzt wird, welches Aufmerksamkeitspotential mit einer Sinkgeschwindigkeit reduziert wird, wobei ein Erreichen oder Unterschreiten eines Grenzwerts durch das Aufmerksamkeitspotential und/oder die Nichtbetätigung des Bedienelements in einer vorbestimmten Zeitspanne nach Erreichen oder Unterschreiten des Grenzwerts und der Ausgabe eines Triggerhinweises an den Fahrer als Übernahmebedingung verwendet wird.

Erfindungsgemäß wird also vorgeschlagen, letztlich von einem aktiven Fahrer auszugehen. Das bedeutet, es wird ein Bedienelement vorgesehen, das bei einer Betätigung für den Fahrer ein Aufmerksamkeitspotential auf einen (maximalen) Startwert setzt. Mit einer Sinkgeschwindigkeit, die im Folgenden noch näher diskutiert werden wird, sinkt dieses Aufmerksamkeitspotential nun über die Zeit ab, vergleichbar mit einem herabsinkenden Schwimmer in einer Wassersäule. Durch Betätigung des Bedienelements kann der Fahrer jederzeit signalisieren, dass er weiter die Verkehrssituation im Auge hält und fahrübernahmebereit ist. Er kann also, beispielsweise durch Druck auf das Betätigungselement, jederzeit das Aufmerksamkeitspotential wieder auf einen Startwert setzen. Erreicht das Potential einen unteren Grenzwert, sinkt es also beispielsweise auf Null ab, so schlägt das erfindungsgemäße Verfahren zwei mögliche Varianten vor. Zum einen kann dann unmittelbar eine Fahrerübernahmeaufforderung ausgegeben werden. Diese Variante ist beispielsweise dann sinnvoll, wenn bei Erreichen eines Mittenwertes zwischen dem Startwert und dem Grenzwert bereits ein Warnhinweis ausgegeben wird, was beispielsweise optisch und/oder akustisch und/oder haptisch erfolgen kann, so dass der Fahrer darauf hingewiesen wird, dass das Aufmerksamkeitspotential bereits stark abgesunken ist. In einer anderen Variante kann vorgesehen sein, dass dann, wenn das Aufmerksamkeitspotential den Grenzwert erreicht oder unterschreitet, ein Triggerhinweis ausgegeben wird, was ebenso optisch und/oder akustisch und/oder haptisch erfolgen kann, der den Fahrer darauf hinweist, dass er durch Betätigung des Bedienelements wieder anzeigen soll, dass er fahrübernahmebereit ist. Wird innerhalb einer vorbestimmten Zeitspanne, beispielsweise innerhalb von 5 Sekunden, das Bedienelement nicht betätigt, kann auch in dieser Variante eine Fahrerübernahmeaufforderung ausgegeben werden.

Der Erfindung liegt die Erkenntnis zugrunde, dass durch die aktive Überwachung des Fahrers diverse wichtige Fahrerzustände nicht oder nur schwer überprüfbar sind. So kann mittels Sensoren aus dem Bereich der "Situation Awareness" nur schwer überprüft werden, ob Müdigkeit vorliegt oder der Fahrer einen starren Blick aufweist. Aus dem Bereich der motorischen Reaktionsfähigkeit ist festzuhalten, dass nur schwer zu bestimmen ist, ob der Fahrer seine Hände einsatzbereit hält. Insgesamt, also der Aufteilung in "Situation Awareness" und motorische Reaktionsfähigkeit übergeordnet, sind jegliche Nebenbeschäftigungen nur schwer über Sensoren zu erfassen. An dieser Stelle setzt das erfindungsgemäße Verfahren an, welches - mit besonderem Vorteil zusätzlich zu einer aktiven Überwachung des Fahrers durch Sensoren - einen aktiven Fahrer fordert, was genau die eben genannten Problemfelder abdeckt, denn der Fahrer wird durch regelmäßige Betätigung des Bedienelements "im Loop" gehalten; das bedeutet, er konzentriert sich weiter auf die Verkehrssituation. Mithin ermöglicht es das erfindungsgemäße Verfahren mit besonderem Vorteil, durch aktive Interaktion des Fahrers durch Setzen von Triggern nur schwer messbare Problembereiche abzudecken und mit dazu beizutragen, den Fahrer als Rückfallebene jederzeit zu erhalten. Damit wird die Sicherheit im Kraftfahrzeug erhöht und der Fahrer wird durch die aktive Interaktion mit dem Bedienelement im Loop gehalten.

Beispielsweise kann ein Aufmerksamkeitspotential verwendet werden, das von eins über einen gewissen Zeitraum auf Null absinkt, wobei selbstverständlich auch andere Werte denkbar sind. Dieser Zeitraum, in dem das Aufmerksamkeitspotential spätestens den Grenzwert erreicht und unterschreitet, kann beispielsweise 30 Sekunden betragen, wobei allgemein zweckmäßigerweise vorgesehen sein kann, dass allein die Betätigung des Bedienelements eine Erhöhung des Aufmerksamkeitspotentials, nämlich durch Setzen auf den Startwert, ermöglicht. So wird sichergestellt, dass der Fahrer in jedem Fall mehr oder weniger regelmäßig das Bedienelement betätigen muss.

Mit besonderem Vorteil kann, wie bereits erwähnt, vorgesehen sein, dass die Sinkgeschwindigkeit unter Berücksichtigung von den aktuellen auf die Fahrzeugführung bezogenen Zustand des Fahrers beschreibenden Daten wenigstens eines Sensors und/oder sonstigen Fahrzeugsystems bestimmt wird. Auf diese Weise wird das Konzept des "aktiven Fahrers" noch um eine "aktive Überwachung" des Fahrers ergänzt, die die übrigen Problemfelder, welche beispielsweise gut durch Sensoren zu vermessen sind, abdeckt, beispielsweise die freie Sicht auf das Verkehrsgeschehen (interessierende Region, kurz häufig auch RoI). Doch auch Daten zur Verkehrssituation, die beispielsweise einen aktuellen Zustand des Kraftfahrzeugs beziehungsweise Umgebungsdaten umfassen können, können erfindungsgemäß einen Einfluss auf die Sinkgeschwindigkeit des Potentials haben, wobei sich bei einem Stauassistenten als Beispiel die Zeitlücke zum Vordermann, ermittelbar aus der Geschwindigkeit und dem Abstand zum Vorderfahrzeug, als interessante, zu betrachtende Größe erwiesen hat.

Das erfindungsgemäße Verfahren ermöglicht es also letztlich basierend auf zwei Säulen, die Verfügbarkeit des Fahrers als Rückfallebene sicherzustellen: zum einen durch die aktive Überwachung des Fahrers, wobei vorhandene Sensorik und Algorithmik genutzt werden kann, zum anderen aber durch die aktive Interaktion des Fahrers mit dem System, durch die der Fahrer im Loop gehalten werden kann. Dabei bestimmen die weiteren Daten, mit welcher Sinkgeschwindigkeit das Aufmerksamkeitspotential reduziert wird, so dass beispielsweise bei einem Fahrer, der einen guten Blick auf das Verkehrsgeschehen, also in die interessierende Region, hat, das Potential langsamer absinkt als wenn die Sicht versperrt ist oder der Fahrer seinen Blick in eine gänzlich andere Richtung gerichtet hält. Die Zeitabstände, in denen der Fahrer das Bedienelement betätigen muss, um das Aufmerksamkeitspotential wieder zu füllen, hängen also letztlich davon ab, inwieweit er sich messbar weiter aufmerksam der Verkehrssituation beziehungsweise dem Verkehrsgeschehen widmet.

Als Sensoren können beispielsweise eine insbesondere bezüglich der freien Sicht des Fahrers auf das Verkehrsgeschehen und/oder des auf das Verkehrsgeschehen gerichteten Blicks des Fahrers und/oder bezüglich eines freien Lenkrads und/oder bezüglich der Position des Fahrers im Sitz auszuwertende Messdaten liefernde Kamera und/oder ein Sitzeinstellungssensor und/oder ein insbesondere bezüglich der Fußstellung relativ zu einer Pedalerie auszuwertende Messdaten liefernder Fußraumsensor verwendet werden. Auch ein Lenkradbelegungssensor ist denkbar. Ein Sitzeinstellungssensor, ein Fußraumsensor und/oder ein Lenkradbelegungssensor sind insbesondere bezüglich der Ermittlung von auf die motorische Reaktionsfähigkeit des Fahrers bezogenen Zustandswerten nützlich. Dabei kann beispielsweise, gemessen durch den entsprechenden Sensor, festgestellt werden, wo genau die Füße im Fußraum stehen, wozu beispielsweise ein bildgebender Sensor verwendet werden kann, jedoch auch andere Möglichkeiten denkbar sind. Ein Lenkradbelegungssensor kann ausgebildet sein, zu detektieren, ob sich die Hände des Fahrers am Lenkrad befinden, zusätzlich sind jedoch auch Lenkradsensoren denkbar, die auch sonstige Gegenstände am oder auf dem Lenkrad feststellen können, so dass geschlussfolgert werden kann, ob das Lenkrad frei ist oder nicht.

Vorzugsweise kann als Sensor auch eine Innenraumkamera verwendet werden, deren Rohdaten durch eine Bildverarbeitung zur Ermittlung wenigstens eines den aktuellen auf die Fahrzeugführung bezogenen Zustand des Fahrers beschreibenden Datums aufbereitet werden. Solche Innenraumkameras sind grundsätzlich bekannt. Mit ihnen kann beispielsweise anhand der Kopfstellung der Blick des Fahrers überprüft werden, es kann festgestellt werden, ob das Lenkrad frei zugänglich ist, ob der Fahrer schläft oder dergleichen. Dies geschieht im erfindungsgemäßen Verfahren dadurch, dass zunächst durch geeignete Bildverarbeitungsroutinen entsprechende Merkmale des Bildes extrahiert werden können, die dann zur letztendlichen Ermittlung der Daten eingesetzt werden.

Es sei an dieser Stelle noch angemerkt, dass selbstverständlich auch weitere Daten, beispielsweise Daten anderer Fahrzeugsysteme, berücksichtigt werden können, wenn es um die Ermittlung der Endgeschwindigkeit geht. Denkbar ist es auch, die Daten mehrerer Sensoren beziehungsweise mehrerer Fahrzeugsysteme zu fusionieren. Sensoren müssen nicht dem vollautomatischen Fahrerassistenzsystem selbst zugeordnet sein, sondern können unabhängig existieren oder auch anderen Fahrzeugsystemen konkret zugeordnet sein. Insgesamt können die Fahrübernahmebereitschaft des Fahrers anzeigende Daten also auch im Rahmen einer Sensor- beziehungsweise Informationsfusion gewonnen werden.

So können beispielsweise als Daten eine die Verkehrssituation beschreibende Größe, insbesondere eine aktuelle Geschwindigkeit des Kraftfahrzeugs und/oder der Abstand von einem Vorderfahrzeug, und/oder eine die Nutzung von Infotainment-Einrichtungen des Kraftfahrzeugs beschreibende Größe berücksichtigt werden. Die Verkehrssituation beschreibende Größen geben letztlich an, wie kritisch die Gesamtsituation einzuschätzen ist, das bedeutet, wie viel Aufmerksamkeit tatsächlich vom Fahrer verlangt werden kann oder wie schnell dieser im Notfall eingreifen können sollte. Hierzu können verschiedenste aus dem Stand der Technik bereits bekannte Methoden zur Analyse einer Verkehrssituation aufgrund von Ego-Daten des Kraftfahrzeugs und Umgebungsdaten genutzt werden. Über die die Nutzung von Infotainment-Einrichtungen des Kraftfahrzeugs beschreibende Größe, für die beispielsweise überprüft werden kann, welche Bedienaktionen der Fahrer an den Infotainment-Einrichtungen vornimmt, wird letztlich eine weitere Nebenbeschäftigungen des Fahrers beschreibende Größe eingeführt, die eine vollständigere Abdeckung der Fahrerübernahmebereitschaft erlaubt. Allerdings ist bei Berücksichtigung dieser Größe davon auszugehen, dass sie sowohl bei zu viel Aktivität des Fahrers im Bezug auf die Infotainment-Einrichtungen als auch bei zu wenig Aktivität des Fahrers in Bezug auf die Infotainment-Einrichtungen eine höhere Sinkgeschwindigkeit auslösen kann, da zu viel Aktivität des Fahrers auf einen abgelenkten Fahrer hindeuten kann, zu wenig Aktivität jedoch auf einen müden, dösenden oder gar schlafenden Fahrer hindeuten könnte.

Mit besonderem Vorteil kann die Sinkgeschwindigkeit unter Verwendung einer Fuzzy-Logik bestimmt werden. Eine Fuzzy-Logik ist in der Lage, aus mehreren Eingangsgrößen nach fest definierten Regeln elegant eine Sinkgeschwindigkeit zu ermitteln. Dabei sollte die Fuzzy-Logik letztlich so ausgelegt werden, dass die Sinkgeschwindigkeit immer positiv bleibt, das bedeutet, sich letztlich zwischen einer minimalen Sinkgeschwindigkeit und einer maximalen Sinkgeschwindigkeit bewegt. Dabei kann vorgesehen sein, dass aus den Daten wenigstens zwei Fuzzy-Variablen ermittelt werden, welche im Rahmen der Inferenz durch Regeln zu wenigstens einer weiteren, der Sinkgeschwindigkeit zugeordneten Fuzzy-Variablen verarbeitet werden, aus welcher durch Defuzzyfizierung die Sinkgeschwindigkeit ermittelt wird. Es ist also besonders vorteilhaft, wenn mehrere zu berücksichtigende Eingangsdaten, die die Fahreraufmerksamkeit im Hinblick auf das Verkehrsgeschehen beschreiben, zu Fuzzy-Variablen zusammengefasst werden, die dann letztlich Eingangsgrößen in den die Regeln definierenden Inferenz-Teil bilden. So kann beispielsweise vorgesehen sein, dass als Fuzzy-Variablen eine die Zeitlücke zu einen Vorderfahrzeug beschreibende Variable und/oder eine den Blick des Fahrers in eine freie interessierende Region beschreibende Variable und/oder eine die Nutzung von Infotainment-Einrichtungen des Kraftfahrzeugs beschreibende Variable verwendet wird. Beispielsweise kann vorgesehen sein, dass die freie Sicht des Fahrers und die Blickrichtung des Fahrers relativ zur interessierenden Region beschreibende Daten zu einer Fuzzy-Variable "Blick des Fahrers in die freie RoI" zusammengefasst werden. Aus dem Abstand zum Vorderfahrzeug als Umgebungsdatum der aktuellen Geschwindigkeit des Kraftfahrzeugs kann eine Zeitlücke zu einem Vorderfahrzeug bestimmt werden. Es kann selbstverständlich auch vorgesehen sein, dass manche Daten unmittelbar fuzzyfiziert werden, beispielsweise die Infotainment-Nutzung.

Bezüglich der Zeitlücke kann beispielsweise vorgesehen sein, dass ein hoher Wert der Fuzzy-Variable, also im Bereich von 1, für geringe Zeitlücken angesetzt wird, während größere Zeitlücken langsam zu einem niedrigerem Fuzzy-Wert für die Zeitlücke-Variable führen können, der aber nicht zwangsläufig 0 sein muss, sondern beispielsweise auch bei 0,2 liegen kann, wenn andere Kriterien, wie beispielsweise der Blick in die freie interessierende Region, als wichtiger angesetzt werden. Tatsächlich kann die eben erwähnte Fuzzy-Variable "Blick in die freie RoI" als wichtigste Größe angesetzt werden, die das Verhalten der Sinkgeschwindigkeit bestimmt. Eine derartige Fuzzy-Variable kann beispielsweise als der prozentuale Anteil, in dem der Fahrer in die interessierende Region blickt beziehungsweise blicken kann, angesetzt werden. Für die Infotainment-Nutzung kann, wie bereits erwähnt, eine Fuzzy-Variable vorgesehen werden, die sowohl bei häufiger wie auch bei sehr seltener Benutzung einen hohen Wert, insbesondere 1, aufweist, und dazwischen ein Minimum bildet, welches wiederum nicht bei 0 liegen muss, sondern beispielsweise bei 0,3 liegen kann.

Bei der Inferenz werden die verschiedenen linguistischen Werte durch Regeln miteinander verknüpft. Dabei kann eine Regel je nach dem Wert der Fuzzy-Variablen einen bestimmten Erfüllungsgrad erhalten. In einer einfachen Ausgestaltung kann beispielsweise vorgesehen sein, dass als Ergebnisvariable ein Produkt der anderen Fuzzy-Variablen gebildet wird, wobei dann wiederum eine Ergebnis-Variable im Bereich von 0 bis 1 erhalten wird. In der Defuzzyfizierung wird diese dann einem konkreten Wert für die Sinkgeschwindigkeit zugeordnet, wobei beispielsweise ein lineares Verhalten zwischen einer maximalen Sinkgeschwindigkeit für einen Wert der Ergebnis-Variable von 1 und eine minimale Geschwindigkeit größer als 0 für eine Ergebnis-Variable von 0 verwendet werden kann (so genanntes "Ergebnis-Feld").

In besonders vorteilhafter Ausgestaltung kann allgemein vorgesehen sein, dass bei Eintritt einer Deaktivierungsbedingung, insbesondere bei wenigstens eine kritische Sitzstellung beschreibenden Daten eines Sitzstellungssensors, das Aufmerksamkeitspotential unmittelbar auf den Grenzwert gesetzt und/oder eine Fahrerübernahmeaufforderung ausgegeben wird. Es können folglich auch "harte" Deaktivierungsbedingungen definiert werden, wenn Daten erhalten werden, die anzeigen, dass es praktisch unmöglich ist, dass der Fahrer noch als Rückfallebene zur Verfügung steht. Ein besonderes Beispiel hierfür ist die Sitzstellung. Wird der Sitz beispielsweise in eine Lage verschoben, in der der Zugang zu den Pedalen und/oder zum Lenkrad für den Fahrer praktisch nicht mehr möglich ist, so kann unmittelbar eine Fahrerübernahmeaufforderung erfolgen, da sich der Fahrer mit höchster Wahrscheinlichkeit gar nicht mehr im Loop befinden kann. Die Verwendung solcher harten Abrufkriterien erhöht weiter die Sicherheit des Fahrerassistenzsystems und kann für den Fall des Sitzstellungssensors beispielsweise dadurch realisiert werden, dass Grenzwerte für bestimmte Einstellungen definiert werden, die nicht über- beziehungsweise unterschritten werden sollten.

In weiterer Ausgestaltung des erfindungsgemäßen Verfahrens kann zweckmäßigerweise vorgesehen sein, dass dem Fahrer der aktuelle Wert des Aufmerksamkeitspotentials optisch und/oder haptisch und/oder akustisch angezeigt wird, insbesondere mittels eines Bildschirms und/oder eines Head-Up-Displays und/oder des Bedienelements, wobei auch andere Komponenten eines Mensch-Maschine-Interfaces, beispielsweise Lautsprecher, verwendet werden können. Auf diese Weise ist dem Fahrer immer bewusst, welchen Wert das Aufmerksamkeitspotential hat und ob er folglich das Bedienelement zur Auffüllung des Aufmerksamkeitspotentials wieder betätigen sollte. Dabei kann beispielsweise eine Visualisierung, insbesondere auch in Form einer Wassersäule oder Sanduhr oder dergleichen, erfolgen, denkbar ist es jedoch auch, den Fahrer beispielsweise akustisch regelmäßig auf den aktuellen Stand des Aufmerksamkeitspotentials hinzuweisen. Auch eine einfache Warnmeldung, wie oben beschrieben, bei einem Mittenwert ist denkbar. Schließlich kann das Aufmerksamkeitspotential mit besonderem Vorteil haptisch über das Bedienelement dargestellt werden, worauf bei diesem noch näher eingegangen werden wird.

Als Bedienelement kann zweckmäßigerweise ein Hebel verwendet werden, insbesondere ein Seitenknüppel (Sidestick). Ein solcher Hebel, insbesondere ein Seitenknüppel, kann mit besonderem Vorteil so angeordnet werden, dass der Fahrer von dem Hebel als Bedienelement schnell das Lenkrad greifen kann, also bei am Hebel befindlicher Hand einsatzbereite Hände aufweist. Beispielsweise kann vorgesehen sein, dass der Hebel, um als Bedienelement betätigt zu werden, vollständig in eine Richtung ausgelenkt werden muss, von wo er dann als Anzeiger des Aufmerksamkeitspotentials gemäß der Sinkgeschwindigkeit in Richtung einer zweiten Extremstellung, die dem Grenzwert entspricht, bewegt wird. Konkret kann also vorgesehen sein, dass der Hebel in Abhängigkeit des Aufmerksamkeitspotentials ausgelenkt wird. Dann bildet das Bedienelement letztlich gleichzeitig eine Anzeigevorrichtung, die dem Fahrer mitteilt, wann wieder eine Betätigung notwendig sein wird. Vorteilhafterweise können weiterhin der Triggerhinweis und/oder die Fahrerübernahmeaufforderung wenigstens teilweise haptisch über den Hebel ausgegeben werden, insbesondere durch eine Vibration des Hebels. Somit fungiert der Hebel, insbesondere, da er auch in Abhängigkeit des Aufmerksamkeitspotentials ausgelenkt wird, in doppelter Hinsicht als eine haptische Anzeigevorrichtung. Ruht beispielsweise die Hand des Fahrers während dem Betriebs des Fahrerassistenzsystems auf dem Hebel, erhält er dadurch alle notwendigen Informationen. Selbstverständlich kann zusätzlich auch vorgesehen sein, dass andere Anzeigemittel, beispielsweise ein Mensch-Maschine-Interface zur optischen und/oder akustischen Anzeige verwendet werden. So kann der Fahrer verbessert im Loop gehalten werden. Gerade Sidesticks, wie sie grundsätzlich bekannt sind, eignen sich aufgrund ihrer häufig ohnehin vorgesehenen haptischen Rückmeldungsmöglichkeiten hervorragend als Bedienelement für die vorliegende Erfindung.

Bezüglich des als Hebel ausgeführten Bedienelements bleibt noch anzumerken, dass auch eine Variante denkbar ist, in der der Fahrer den Hebel letztlich ständig in einer ausgelenkten Position hält. Dies kann als eine Art "Hands-on"-Variante gesehen werden, wobei dann zum Zurücksetzen des Aufmerksamkeitspotentials spezielle Bedienmöglichkeiten an den Hebel realisiert werden können. Beispielsweise kann eine zweite Flanke vorgesehen sein, das bedeutet, dass der Fahrer den Hebel, den er schon in einer bestimmten Auslenkung hält, unter Überwindung eines Potentials, beispielsweise eines Reibepunktes, oder gar nur freigegeben, wenn das Aufmerksamkeitspotential gerade abgelaufen ist, in eine weitere, noch weiter ausgelenkte Position bewegen. Neben einer solchen zweiten Flanke kann selbstverständlich auch eine andere Variante realisiert werden, beispielsweise eine an dem Hebel angeordnete Taste, die zum Wiederauffüllen des Aufmerksamkeitspotentials gedrückt werden muss. Es sei darauf hingewiesen, dass bei einer solchen Realisierung entweder die Sinkgeschwindigkeit des Aufmerksamkeitspotentials davon abhängen kann, ob der Fahrer die Hand am Bedienelement hält, jedoch kann ebenso vorteilhaft vorgesehen sein, dass ein hartes Abbruchkriterium realisiert wird; das bedeutet, dass das Fahrerassistenzsystem gegebenenfalls unter Ausgabe einer Fahrerübernahmeaufforderung deaktiviert wird. Im letzteren Fall wäre eine tatsächliche "Hands-on"-Realisierung gegeben, mit der der Fahrer den Hebel grundsätzlich bis zum ersten Auslenkpunkt ausgelenkt halten muss, um anzuzeigen, dass er weiter dem Verkehrsgeschehen folgt.

Um sicherzustellen, dass der Fahrer konzentriert und willentlich das Bedienelement, insbesondere den Hebel, betätigt, kann vorgesehen sein, dass das Aufmerksamkeitspotential nur bei einer vollen Auslenkung des Hebels wieder auf den Startwert gesetzt wird. Auf diese Weise muss der Fahrer den Hebel möglichst vollständig durchdrücken, um das Aufmerksamkeitspotential wieder vollständig aufzufüllen.

Zur Ausgestaltung der Fahrerübernahmeaufforderung und den folgenden Maßnahmen kann letztlich analog wie im Stand der Technik bekannt vorgegangen werden. Beispielsweise kann vorgesehen sein, dass, wenn nach einer zweiten vorbestimmten Zeitspanne keine Fahrübernahme des Fahrers erfolgt, das Fahrerassistenzsystem deaktiviert und/oder eine Warnblinkanlage des Kraftfahrzeugs aktiviert wird. Zusätzlich kann selbstverständlich auch ein entsprechender Hinweis ausgegeben werden, beispielsweise eine entsprechende Nachricht in einer Kombinationsanzeige, eine Sprachausgabe oder dergleichen. Über die Warnblinkanlage können andere Verkehrsteilnehmer über die kritische Situation, letztlich also die Weigerung oder Unfähigkeit des Fahrers, die Fahrverantwortung wieder zu übernehmen, informiert werden.

Neben dem erfindungsgemäßen Verfahren betrifft die Erfindung auch ein Kraftfahrzeug, umfassend ein vollautomatisches, zur unabhängigen Fahrzeugführung ausgebildetes Fahrerassistenzsystem mit einem zu dessen Betrieb ausgebildeten Steuergerät, welches zur Durchführung des erfindungsgemäßen Verfahrens ausgebildet ist, sowie ein dem Fahrerassistenzsystem zugeordnetes Bedienelement. Sämtliche Ausführungen bezüglich des erfindungsgemäßen Verfahrens lassen sich analog auf das erfindungsgemäße Kraftfahrzeug übertragen, so dass dementsprechend dort auch eine besonders sichere Überwachung des aktiven Fahrers stattfinden kann.

Das Steuergerät ist mithin nicht nur dazu ausgebildet, die anderen Systemgrenzen, also Übernahmebedingungen, zu überwachen und gegebenenfalls eine Fahrerübernahmeaufforderung auszugeben, sondern auch, letztlich als weitere Systemgrenze das Aufmerksamkeitspotential zu überwachen. Automatisch wird dabei in Zeitschritten eine Erniedrigung des Potentials, gegebenenfalls mit variabler Sinkgeschwindigkeit, vorgenommen, und es wird gleichzeitig das Bedienelement überwacht, ob es zur Wiederauffüllung des Potentials, also zum Setzen des Potentials auf den Startwert, betätigt wird. Ferner ist das Steuergerät also ausgebildet, zu überwachen, ob das Aufmerksamkeitspotential einen Grenzwert erreicht oder unterschreitet. Ist dies der Fall, wird ein Triggerhinweis und/oder unmittelbar eine Fahrerübernahmeaufforderung ausgegeben. Auch die weiteren Ausführungen des erfindungsgemäßen Verfahrens, wie sie im Vorangegangenen beschrieben wurden, lassen sich analog auf das erfindungsgemäße Kraftfahrzeug anwenden, welches insbesondere wenigstens einen Sensor umfasst, um auch eine aktive Überwachung des aktiven Fahrers zu ermöglichen.

Es sei abschließend noch angemerkt, dass selbstverständlich auch andere Sensoren als die bislang genannten Sensoren verwendet werden können beziehungsweise im Kraftfahrzeug vorgesehen sein können. Denkbar sind beispielsweise auch Sitzbelegungssensoren, falls sich beispielsweise der Fahrer aus dem Fahrersitz in einem anderen Bereich des Kraftfahrzeugs bewegt, oder auch ein Gurtsensor oder dergleichen.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1    ein erfindungsgemäßes Kraftfahrzeug,

Fig. 2    einen Ablaufplan des erfindungsgemäßen Verfahrens,

Fig. 3    ein Prinzipdiagramm zur Fuzzy-Logik,

Fig. 4    einen die Zeitlücke als erste Fuzzy-Variable darstellenden Graphen,

Fig. 5    einen den Blick in die freie Rol als zweite Fuzzy-Variable zeigenden Graphen,

Fig. 6    einen die Infotainment-Nutzung als dritte Fuzzy-Variable zeigenden Graphen,

Fig. 7    einen die Defuzzyfizierung überschreitenden Graphen, und

Fig. 8    einen möglichen Aktionsplan bei den Grenzwert erreichendem oder unterschreitendem Aufmerksamkeitspotential.

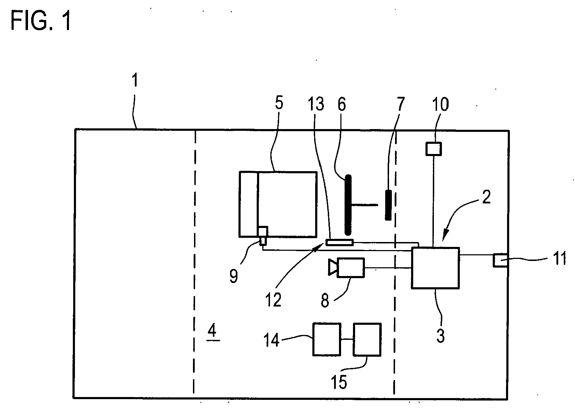

Fig. 1 zeigt ein erfindungsgemäßes Kraftfahrzeug 1. Es umfasst ein vollautomatisches Fahrerassistenzsystem 2 mit einem Steuergerät 3. Das vollautomatische Fahrerassistenzsystem 2 kann beispielsweise ein Stauassistenzsystem oder dergleichen sein. Ersichtlich sind im Kraftfahrzeug, konkret im Innenraum 4 des Kraftfahrzeugs 1, indem sich unter anderem der Fahrersitz 5, das Lenkrad 6 und die Pedalerie 7 befinden, verschiedene Sensoren vorgesehen. Eine Innenraumkamera 8 nimmt letztlich den gesamten Aktionsbereich des Fahrers auf. Zudem ist ein Sitzeinstellungssensor 9 vorgesehen. Weiterhin sind in Fig. 1 noch ein Geschwindigkeitssensor 10 und ein den Abstand zu einem Vorderfahrzeug messender Sensor 11 angedeutet. Es sei bereits an dieser Stelle daraufhingewiesen, dass selbstverständlich eine Vielzahl weiterer Sensoren vorgesehen sein kann, beispielsweise auch ein Lenkradbelegungssensor, ein Fußraumsensor, ein Sitzbelegungssensor sowie weitere den Betriebszustand des Kraftfahrzeugs 1 und die Umgebung vermessende Sensoren. Die Daten all dieser Sensoren 8 - 11 werden dem Steuergerät 3 zugänglich gemacht.

Weiterhin umfasst das Kraftfahrzeug 1 noch ein dem Fahrerassistenzsystem 2 zugeordnetes Bedienelement 12, hier in Form eines Seitenknüppels 13, welcher benachbart dem Lenkrad 6 angeordnet ist, so dass ein schnelles Umgreifen von dem Seitenknüppel 13 zum Lenkrad 6 erfolgen kann. Schließlich umfasst das Kraftfahrzeug 1 noch eine bei 14 angedeutete optische und/oder akustische Anzeigevorrichtung, beispielsweise ein Mensch-Maschine-Interface, über welches nicht nur dem Fahrer optisch und/oder akustisch Informationen vermittelt werden können, sondern über das er auch Infotainment-Einrichtungen 15 des Kraftfahrzeugs 1, beispielsweise ein Navigationssystem, eine Audioanlage oder dergleichen bedienen kann. Daten über die Bedienaktivität eines Fahrers sind ebenso dem Steuergerät 3 zur Verfügung stellbar.

Dieses Steuergerät 3 ist nun dazu ausgebildet, das erfindungsgemäße Verfahren auszuführen, das heißt konkret, es verwaltet als Wert ein Aufmerksamkeitspotential, welches durch Betätigung des Bedienelements 12 auf seinen Maximalwert, den Startwert, gesetzt werden kann, und dann mit einer von verschiedenen Daten abhängigen Sinkgeschwindigkeit bis hin zu einem Grenzwert, im Beispiel 0, absinkt, wobei gegebenenfalls vorgesehen sein kann, dass es vor Ablauf durch Betätigung des Bedienelements 12 wieder erhöht wird. Erreicht es den Grenzwert, so wird in diesem Ausführungsbeispiel zunächst ein Triggerhinweis ausgegeben, hier über das Bedienelement 12 selber und die Anzeigevorrichtung 14, woraufhin nach einer vorbestimmten Zeitspanne eine Fahrerübernahmeaufforderung erfolgt.

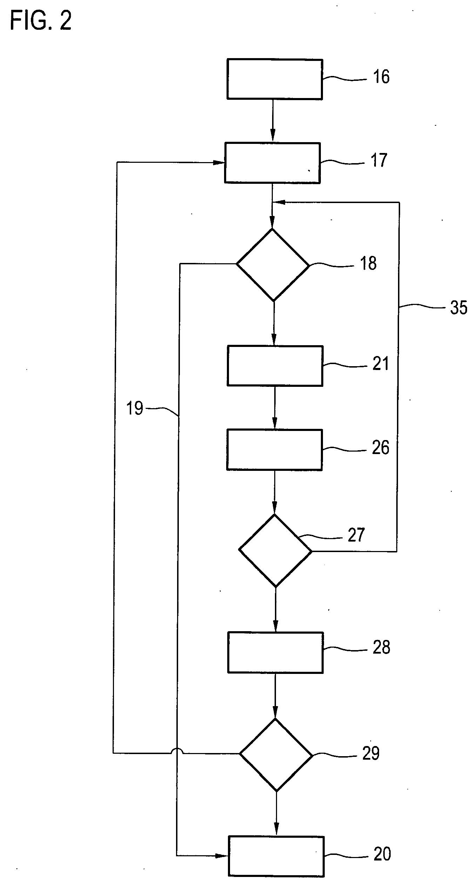

Fig. 2 zeigt einen Ablaufplan des erfindungsgemäßen Verfahrens. Dabei wird zunächst in einem Schritt 16 das Fahrerassistenzsystem 2 aktiviert. Gleichzeitig erfolgt eine Initialisierung des Aufmerksamkeitspotentials auf den Startwert in Schritt 17.

In einem Schritt 18 werden zunächst die Daten des Sitzstellungssensors 9 näher ausgewertet. Überschreitet die Sitzverstellung bestimmte Grenzwerte, ist also letztlich eine Sitzeinstellung gegeben, in der der Fahrer mit größter Wahrscheinlichkeit nicht mehr fahrübernahmebereit sein kann, so wird, vergleiche Pfeil 19, unmittelbar eine Fahrerübernahmeaufforderung ausgegeben, Schritt 20. Selbstverständlich können bezüglich des Schritts 18 noch weitere "harte" Deaktivierungsbedingungen für das Fahrerassistenzsystem 2, die zu einer Fahrerübernahmeaufforderung führen, definiert werden.

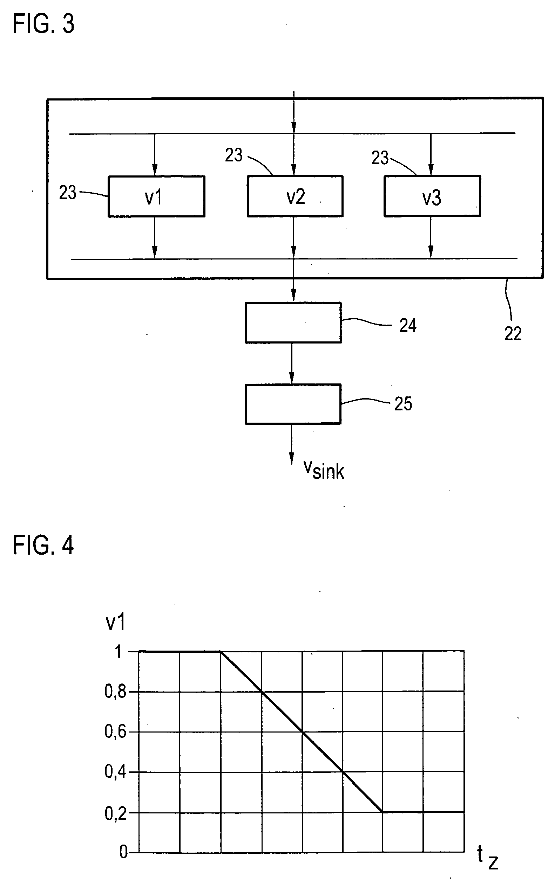

Ist keine dieser Deaktivierungsbedingungen in Schritt 18 gegeben, so werden in Schritt 21 weitere, den aktuellen auf die Fahrzeugführung bezogenen Zustand des Fahrers beschreibende Daten der Sensoren 8 - 11 und weiterer Fahrzeugsysteme ausgewertet, um die Sinkgeschwindigkeit des Aufmerksamkeitspotentials zu ermitteln. Dies geschieht mit Hilfe einer Fuzzy-Logik, die durch Fig. 3 näher erläutert werden soll.

Im vorliegenden Ausführungsbeispiel werden drei Fuzzy-Variablen verwendet, und zwar eine die Zeitlücke zu einem Vorderfahrzeug des Kraftfahrzeugs 1 beschreibende Fuzzy-Variable $v1$, ein den Blick des Fahrers in die freie interessierende Region beschreibende Fuzzy-Variable $v2$ und eine die Nutzung der Infotainment-Einrichtungen 15 beschreibende Fuzzy-Variable $v3$. In dem hervorgehobenen Kasten 22, in dem die Fuzzyfizierung stattfindet, werden diese Fuzzy-Variablen $v1$, $v2$ und $v3$ berechnet, Kästchen 23. Wie auch in Fig. 3 durch die verlängerten Enden angedeutet, können selbstverständlich auch noch weitere Fuzzy-Variablen betrachtet werden.

Zur Ermittlung der Fuzzy-Variable $v1$ werden als Daten die Geschwindigkeit des Kraftfahrzeugs, ermittelt über den Geschwindigkeitssensor 10, und der Abstand zum Vorderfahrzeug, ermittelt durch den Umgebungssensor 11, betrachtet. Aus diesen lässt sich wie grundsätzlich bekannt die Zeitlücke zum Vorderfahrzeug ermitteln. Diese lässt sich dann auf eine Fuzzy-Variable $v1$ abbilden, wie dies in Fig. 4 näher dargestellt ist. Der Wert der Fuzzy-Variablen $v1$ wird gegen die gemessene Zeitlücke $t_z$ aufgetragen. Ersichtlich hat eine geringe gemessene Zeitlücke ein hohes $v1$ zur Folge, was, wie später noch dargelegt werden wird, zu einer hohen Sinkgeschwindigkeit beiträgt, während eine große Zeitlücke einen geringen Wert von $v1$, hier 0,2, zur Folge hat, mithin zu einer niedrigen Sinkgeschwindigkeit beiträgt. Gerade für ein Stauassistenzsystem gibt die Zeitlücke recht deutlich an, wie kritisch das Verkehrsgeschehen ist, das bedeutet, wie schnell der Fahrer tatsächlich eingreifen muss.

Die Fuzzy-Variable $v2$, die im vorliegenden Ausführungsbeispiel das wichtigste Kriterium darstellt, ergibt sich letztlich aus Daten der Kamera 8, die einer geeigneten Bildverarbeitung zugeführt werden, die zum einen bestimmt, ob der Blick auf die interessierende Region (RoI), also das Verkehrsgeschehen, frei ist, zum anderen aber, wie die Blickrichtung des Fahrers ist. Hieraus wird zunächst eine Größe A bestimmt, die den prozentualen Anteil, mit dem der Fahrer seinen Blick auf die interessierende Region, mithin das Verkehrsgeschehen, richtet, wiedergibt. Ersichtlich ist $v2$ am größten, wenn der Fahrer keinerlei Aufmerksamkeit auf das Verkehrsgeschehen richtet, und am kleinsten, hier insbesondere 0, wenn der Fahrer das Verkehrsgeschehen hinreichend aufmerksam verfolgt, wobei der Wert 0 beispielsweise bei A = 90 % oder einem anderen Schwellwert angenommen werden kann. Im hier dargestellten Ausführungsbeispiel ist es aber so, dass nur bei 100 %igem Blick des Fahrers in die interessierende Region der Wert $v2 = 0$ erreicht wird. Auch hier gilt, dass mit größerem $v2$ letztlich eine größere Sinkgeschwindigkeit erreicht werden wird.

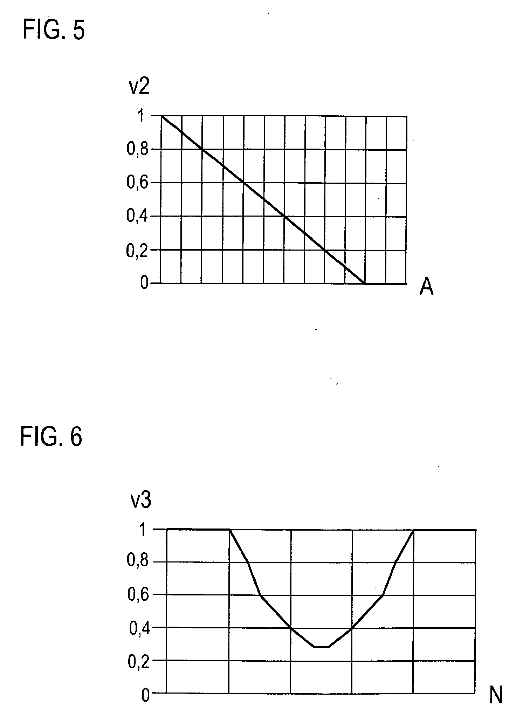

Schließlich wird noch die Nutzungshäufigkeit N der Infotainment-Einrichtungen 15 betrachtet, vgl. Fig. 6. Ersichtlich wird eine moderate Nutzung der Infotainment-Einrichtung als optimal angesehen, da bei einer zu häufigen Nutzung der Fahrer durch diesen Vorgang abgelenkt ist, bei einer zu geringen Nutzung jedoch angenommen werden kann, dass der Fahrer döst, müde ist oder gar schläft. Mithin ergibt sich die in Fig. 6 gezeigte Kurve, die ihr Minimum bei einem Wert von $v3 = 0,3$ hat.

Nach dieser Fuzzyfizierung erfolgt in einem Schritt 24, vgl. wiederum Fig. 3, die Inferenz. Das bedeutet, es werden Regeln verwendet, um die Fuzzy-Variablen $v1$ - $v3$ zu einer Ergebnis-Variable $v4$ zu verknüpfen. Während selbstverständlich auch komplexe Regeln zur Verknüpfung der Fuzzy-Variablen eingesetzt werden können, sei im hiesigen Ausführungsbeispiel ein einfacher Fall dargestellt, in dem sich $v4$ einfach als

$$v4 = v1 \times v2 \times v3$$

ergibt.

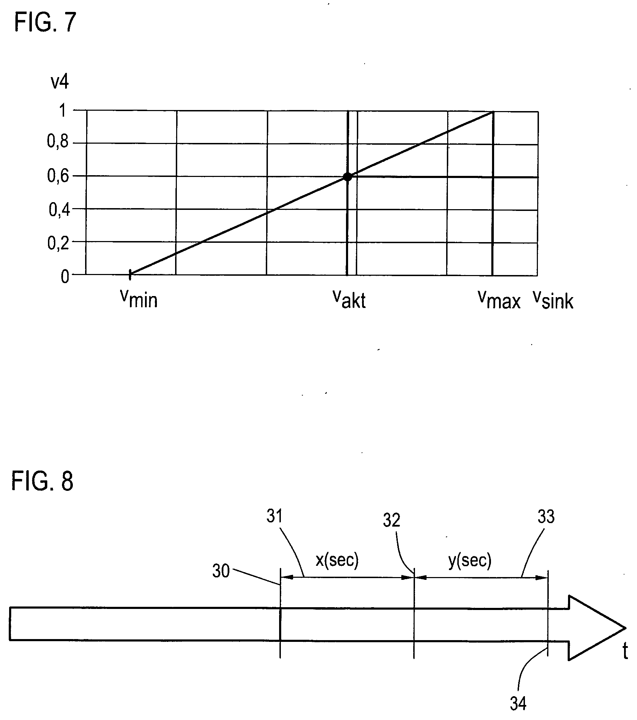

Dieser sich ergebende Wert für die Ergebnis-Variable $v4$ muss nun noch im Rahmen der Defuzzyfizierung, Schritt 25 in Fig. 3, eine Sinkgeschwindigkeit $v_{Sink}$ zugeordnet werden. Dabei soll $v_{sink}$ so bestimmt werden, dass es zwischen einer maximalen Sinkgeschwindigkeit $v_{max}$ und einer Minimalgeschwindigkeit $v_{min} > 0$ liegen soll, wobei dann für $v4 = 1$ die Sinkgeschwindigkeit $v_{sink} = v_{max}$ sein soll und für $v4 = 0$ die Sinkgeschwindigkeit $v_{sink} = v_{min}$ werden soll. Dies wird durch den Grafen in Fig. 7 näher erläutert, wobei hier ein linearer Zusammenhang gewählt wurde. Aufgetragen ist $v4$ gegen die Sinkgeschwindigkeit $v_{sink}$, wobei für einen Beispielswert von $v4$ eine Beispielsinkgeschwindigkeit $v_{akt}$ erreicht wird.

Es sei an dieser Stelle noch angemerkt, dass sich aus dem Startwert geteilt durch die minimale Sinkgeschwindigkeit $v_{min}$ die maximale Zeit zwischen zwei notwendigen Betätigungen des Bedienelements 12 ergibt, welche beispielsweise etwa 30 Sekunden betragen kann.

Ist auf diese Weise also eine Sinkgeschwindigkeit bestimmt worden, so, vgl. wiederum die Fig. 2, wird in einem Schritt 26 das Potential abhängig von der Sinkgeschwindigkeit verringert.

Danach wird in einem Schritt 27 überprüft, ob das Aufmerksamkeitspotential leer ist, das bedeutet, ob es den Grenzwert, hier 0, bereits erreicht hat. Ist es nicht der Fall, so wird im nächsten Zeitschritt wieder bei Schritt 18 fortgefahren, wie durch den Pfeil 35 angedeutet ist.

Ist der Grenzwert jedoch erreicht (oder unterschritten), so erfolgt in einem Schritt 28 ein Triggerhinweis, was im Folgenden näher erläutert werden wird. Danach hat der Fahrer eine vorbestimmte Zeitspanne, beispielsweise 5 Sekunden, Zeit, um das Bedienelement 12 wieder zu betätigen, was in Schritt 29 überprüft wird. Wird das Bedienelement 12 betätigt, wird wieder bei Schritt 17 fortgefahren.

Es sei an dieser Stelle noch angemerkt, dass grundsätzlich zwar vorgesehen sein kann, dass eine Betätigung des Bedienelements auch unabhängig von den Schritten 28 und 29 das Aufmerksamkeitspotential auf den Startwert setzen kann, allerdings ist es vorteilhaft, wenn eine solche Betätigung des Bedienelements nur im Fall des Triggerhinweises 28 erst möglich ist. Dies begründet sich darin, dass hierdurch vermieden wird, dass der Fahrer beispielsweise durch ständiges Betätigen des Bedienelements, während er einer Nebenbeschäftigung nachgeht, den Effekt des Bedienelements oder des Aufmerksamkeitspotentials in das Gegenteil verkehren kann. Im Falle des Seitenknüppels 13 kann hierzu beispielsweise vorgesehen sein, dass der Hebel außerhalb des Triggerhinweises nicht betätigt werden kann oder dergleichen. Es sei daraufhingewiesen, dass selbstverständlich auch eine dauerhafte Betätigung des Bedienelements 12 grundsätzlich vom Steuergerät 3 überprüft werden kann.

Erfolgt während der vorbestimmten Zeitspanne keine Betätigung des Bedienelements 12, so wird wiederum eine Fahrerübernahmeaufforderung ausgegeben, Schritt 20.

Der durch das Steuergerät 3 ausgeführte Aktionsplan bei leerem Aufmerksamkeitspotential wird durch die Fig. 8 näher erläutert. Dort ist ein nach rechts verlaufender Zeitstrahl aufgezeichnet. Zum Zeitpunkt 30 erreicht oder unterschreitet das Aufmerksamkeitspotential den Grenzwert. Gleichzeitig wird dann der Triggerhinweis ausgegeben. Erfolgt nach der ersten Zeitspanne 31 keine Betätigung des Bedienelements 12, so wird zum Zeitpunkt 32 eine Fahrerübernahmeaufforderung ausgegeben. Dann wird für eine zweite vorbestimme Zeitspanne 33 überprüft, ob eine Fahrübernahme durch den Fahrer erfolgt. Ist dies nicht der Fall, wird zu einem Zeitpunkt 34 das Fahrerassistenzsystem 2 deaktiviert und es werden die Warnblinker des Kraftfahrzeugs 1 aktiviert.

Das als Seitenknüppel 13 ausgeführte Bedienelement 12 hat im vorliegenden Verfahren neben seiner Funktion als Bedienelement 12 auch Anzeigefunktionen. Der Seitenknüppel 13 ist dazu zwischen zwei Extremstellungen auslenkbar, wobei die eine Extremstellung dem Startwert des Aufmerksamkeitspotentials die andere Extremstellung dem leeren Aufmerksamkeitspotential, also dem Grenzwert, entspricht. Der Seitenknüppel 13 wird nun immer in einer Stellung abhängig vom aktuellen Wert des Aufmerksamkeitspotentials gebracht. Liegt die Hand des Fahrers beispielsweise auf dem Seitenknüppel 13, so kann er damit regelrecht "erspüren", wie das Aufmerksamkeitspotential absinkt. Selbstverständlich kann gleichzeitig, beispielsweise über die Anzeigevorrichtung 14, der Fahrer über das Potential informiert werden, beispielsweise in Form einer Wassersäule mit einem Schwimmer oder einer Sanduhr.

Doch auch zur Gabe eines haptischen Triggerhinweises wird der Seitenknüppel 13 verwendet. So kann beispielsweise vorgesehen sein, dass er vibriert, so dass der Fahrer weiß, dass er den Seitenknüppel 13 wieder in die andere Extremstellung bringen muss. Dabei ist es nicht ausreichend, den Seitenknüppel in eine Zwischenstellung zu bewegen, sondern er muss wirklich vollständig bis in die Extremstellung, die dem Startwert des Aufmerksamkeitspotentials entspricht, gebracht werden, um das Aufmerksamkeitspotential auf den Startwert neu zu initialisieren.

Es sei darauf hingewiesen, dass selbstverständlich auch bestimmte Mittenwerte des Aufmerksamkeitspotentials dem Fahrer zur Anzeige gebracht werden können, beispielsweise durch eine andere Art der Vibration des Seitenknüppels 13. Schließlich sei angemerkt, dass das erfindungsgemäße Kraftfahrzeug 1 auch ein Head-Up-Display umfassen kann, welches ebenso zur Anzeige von Informationen und Hinweisen bezüglich des Aufmerksamkeitspotentials genutzt werden kann.

In einer anderen, hier nicht näher dargestellten Variante kann ebenso als Bedienelement ein Hebel vorgesehen sein, jedoch wird dabei gefordert, dass der Fahrer die Hand ständig an diesem Hebel hält, um anzuzeigen, dass er das Verkehrsgeschehen beobachtet. Dabei ist eine erste Auslenkposition gegeben, bis zu der der Fahrer den Hebel bewegen und dort halten kann. Zum Auffüllen des Aufmerksamkeitspotentials kann dann vorgesehen sein, dass der Fahrer den Hebel kurzzeitig bis zu einem zweiten Auslenkpunkt über den ersten Auslenkpunkt hinaus auslenken muss oder einen Taster an dem Hebel bedient. Lässt der Fahrer den Hebel los, bewegt sich dieser also vom ersten Auslenkpunkt weg oder gar in seine Grundstellung zurück, was über ein entsprechendes Rückstellmittel erreicht werden kann, so kann beispielsweise vorgesehen sein, dass sich die Sinkgeschwindigkeit des Aufmerksamkeitspotentials erhöht oder gar als hartes Abwurfkriterium das Fahrerassistenzsystem, gegebenenfalls unter Ausgabe einer Fahrübernahmeaufforderung, deaktiviert wird.

**Patentansprüche**

1. Verfahren zur Steuerung des Betriebs eines vollautomatischen, zur unabhängigen Fahrzeugführung ausgebildeten Fahrerassistenzsystems (2) eines Kraftfahrzeugs (1), bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads (6) und/oder der Pedalerie (7), zum Deaktivieren des Fahrerassistenzsystems (2) führt,
**dadurch gekennzeichnet,**
**dass** abhängig von einer Betätigung eines Bedienelements (12) durch den Fahrer ein Aufmerksamkeitspotential auf einen Startwert gesetzt wird, welches Aufmerksamkeitspotential mit einer Sinkgeschwindigkeit reduziert wird, wobei ein Erreichen oder Unterschreiten eines Grenzwerts durch das Aufmerksamkeitspotential und/oder die Nichtbetätigung des Bedienelements (12) in einer vorbestimmten Zeitspanne nach Erreichen oder Unterschreiten des Grenzwerts und der Ausgabe eines Triggerhinweises an den Fahrer als Übernahmebedingung verwendet wird.

2. Verfahren nach Anspruch 1, **dadurch gekennzeichnet, dass** die Sinkgeschwindigkeit unter Berücksichtigung von den aktuellen auf die Fahrzeugführung bezogenen Zustand des Fahrers beschreibenden Daten wenigstens eines Sensors und/oder sonstigen Fahrzeugsystems bestimmt wird.

3. Verfahren nach Anspruch 2, **dadurch gekennzeichnet, dass** als Sensor eine insbesondere bezüglich der freien Sicht des Fahrers auf das Verkehrsgeschehen und/oder des auf das Verkehrsgeschehen gerichteten Blicks des Fahrers und/oder bezüglich der Position im Sitz und/oder bezüglich eines freien Lenkrads (6) und/oder bezüglich der Position des Fahrers im Sitz auszuwertende Messdaten liefernde Kamera (8) und/oder ein Sitzstellungssensor (9) und/oder ein insbesondere bezüglich der Fußstellung relativ zu einer Pedalerie (7) auszuwertende Messdaten liefernder Fußraumsensor verwendet wird.

4. Verfahren nach Anspruch 2 oder 3, **dadurch gekennzeichnet, dass** als Daten eine die Verkehrssituation beschreibende Größe, insbesondere eine aktuelle Geschwindigkeit des Kraftfahrzeugs (1) und/oder der Abstand von einem Vorderfahrzeug, und/oder eine die Nutzung von Infotainment-Einrichtungen (15) des Kraftfahrzeugs (1) beschreibende Größe berücksichtigt werden.

5. Verfahren nach einem der Ansprüche 2 bis 4, **dadurch gekennzeichnet, dass** die Sinkgeschwindigkeit unter Verwendung einer Fuzzy-Logik bestimmt wird.

6. Verfahren nach Anspruch 5, **dadurch gekennzeichnet, dass** aus den Daten wenigstens zwei Fuzzy-Variablen ermittelt werden, welche im Rahmen der Inferenz durch Regeln zu wenigstens einer weiteren, der Sinkgeschwindigkeit zugeordneten Fuzzy-Variablen verarbeitet werden, aus welcher durch Defuzzyfizierung die Sinkgeschwindigkeit ermittelt wird.

7. Verfahren nach Anspruch 6, **dadurch gekennzeichnet, dass** als Fuzzy-Variablen eine die Zeitlücke zu einem Vorderfahrzeug beschreibende Variable und/oder eine den Blick des Fahrers in eine freie interessierende Region beschreibende Variable und/oder eine die Nutzung von Infotainment-Einrichtungen (15) des Kraftfahrzeugs (1) beschreibende Variable verwendet werden.

8. Verfahren nach einem der vorangehenden Ansprüche, **dadurch gekennzeichnet, dass** bei Eintritt einer Deaktivierungsbedingung, insbesondere bei wenigstens eine kritische Sitzstellung beschreibenden Daten eines Sitzstellungssensors (9), das Aufmerksamkeitspotential unmittelbar auf den Grenzwert gesetzt und/oder eine Fahrerübernahmeaufforderung ausgegeben wird.

9. Verfahren nach einem der vorangehenden Ansprüche, **dadurch gekennzeichnet, dass** dem Fahrer der aktuelle Wert des Aufmerksamkeitspotentials optisch und/oder haptisch und/oder akustisch angezeigt wird, insbesondere mittels eines Bildschirms und/oder eines Head-Up-Displays und/oder des Bedienelements (12).

10. Verfahren nach einem der vorangehenden Ansprüche, **dadurch gekennzeichnet, dass** als Bedienelement (12) ein Hebel verwendet wird, insbesondere ein Seitenknüppel (13).

11. Verfahren nach Anspruch 10, **dadurch gekennzeichnet, dass** der hebel in Abhängigkeit des Aufmerksamkeitspotentials ausgelenkt wird und/oder der Triggerhinweis und/oder die Fahrerübernahmeaufforderung wenigstens teilweise haptisch über den Hebel ausgegeben wird, insbesondere durch eine Vibration des Hebels.

12. Verfahren nach einem der Ansprüche 9 oder 10, **dadurch gekennzeichnet, dass** das Aufmerksamkeitspotential nur bei einer vollen Auslenkung des Hebels wieder auf den Startwert gesetzt wird.

13. Verfahren nach einem der vorangehenden Ansprüche, **dadurch gekennzeichnet, dass,** wenn nach einer zweiten vorbestimmten Zeitspanne keine Fahrübernahme des Fahrers erfolgt, das Fahrerassistenzsystem (2) deaktiviert und/oder eine Warnblinkanlage des Kraftfahrzeugs (1) aktiviert wird.

14. Kraftfahrzeug (1), umfassend ein vollautomatisches, zur unabhängigen Fahrzeugführung ausgebildetes Fahrerassistenzsystem (2) mit einem zu dessen Betrieb ausgebildeten Steuergerät (3), ausgebildet zur Durchführung des Verfahrens nach einem der vorangehenden Ansprüche, und ein dem Fahrerassistenzsystem (2) zugeordnetes Bedienelement (12).

**Claims**

1. A method for controlling the operation of a fully-automated driver assistance system (2) of a motor vehicle (1) designed for independent vehicle guidance, wherein upon occurrence of at least one takeover condition a driver takeover request is issued, which upon driver takeover by the driver, in particular upon operation of the steering wheel (6) and/or the pedals (7), leads to the deactivation of the driver assistance system (2), **characterised in that** dependent upon the operation of a control element (12) by the driver an attention potential is set at a starting value, which attention potential is reduced at a sink rate, wherein reaching or falling below a threshold value by the attention potential and/or the non-operation of the control element (12) within a predetermined interval after reaching or falling below the threshold value and the issue of a trigger notice to the driver is used as the takeover condition.

2. A method according to claim 1, **characterised in that** the sink rate is determined taking into account the current data from at least one sensor and/or other vehicle system on the status of the driver with regard to driving.

3. A method according to claim 2, **characterised in that** as the sensor a camera (8) providing measurement data to be evaluated concerning the driver's unobstructed view of the traffic scene and/or the view of the driver directed at the traffic scene and/or concerning the position in the seat and/or concerning an unobstructed steering wheel (6) and/or concerning the position of the driver in the seat and/or a seating position sensor (9) and/or a foot well sensor providing measurement data concerning in particular the foot position relative to the pedals (7), is used.

4. A method according to claim 2 or 3, **characterised in that** as the data a variable describing a traffic situation, in particular a current speed of the motor vehicle (1) and/or the distance from a vehicle ahead, and/or a variable describing the use of infotainment equipment (15) of the motor vehicle (1) are taken into account.

5. A method according to one of claims 2 to 4, **characterised in that** the sink rate is determined using a fuzzy logic.

6. A method according to claim 5, **characterised in that** from the data at least two fuzzy variables are determined, which are processed within the context of the inference through rules on at least one further fuzzy variable associated with the sink rate, from which by defuzzification the sink rate is determined.

7. A method according to claim 6, **characterised in that** as fuzzy variables a variable describing the time gap to a vehicle ahead and/or a variable describing the view of the driver in an unobstructed region of interest and/or a variable describing the use of infotainment equipment (15) of the motor vehicle (1) are used.

8. A method according to one of the above claims, **characterised in that** upon occurrence of a deactivation condition, in particular data of a seating position sensor (9) describing at least one critical seating position, the attention potential is immediately set at the threshold value and/or a driver takeover request is issued.

9. A method according to one of the above claims, **characterised in that** the current value of the attention potential is indicated to the driver optically and/or haptically and/or acoustically, in particular by means of a screen and/or a head-up display and/or the control element (12).

10. A method according to one of the above claims, **characterised in that** as the control element (12) a lever, in particular a lateral control column (13), is used.

11. A method according to claim 10, **characterised in that** the lever is deflected as a function of the attention potential and/or the trigger notice and/or the driver takeover request is issued at least partially haptically via the lever, in particular by vibration of the lever.

12. A method according to either claim 9 or 10, **characterised in that** the attention potential is reset to the starting value only once the lever has been fully deflected.

13. A method according to one of the above claims, **characterised in that** if after a second predetermined interval no driver takeover by the driver takes place, the driver assistance system (2) is deactivated and/or a hazard warning system of the motor vehicle (1) is activated.

14. A motor vehicle (1) comprising a fully-automated driver assistance system (2) designed for independent vehicle guidance with a control unit (3) designed for its operation, designed to carry out the method according to any of the above claims, and a control element (12) associated with the driver assistance system (2).

## Revendications

1. Procédé de commande du fonctionnement d'un système d'assistance à la conduite (2) de véhicule (1) pour la conduite d'un véhicule de façon automatique, dans lequel à l'entrée d'au moins une condition de prise en charge, un ordre de prise en charge de conduite est délivré, lequel conduit, lors de la prise en charge de la conduite par le conducteur, en particulier par l'actionnement du volant (6) et/ou des pédales (7), à désactiver le système d'assistance à la conduite (2), **caractérisé en ce que**, en fonction de l'actionnement d'un élément de commande (12) par le conducteur, un potentiel de vigilance est mis à une valeur initiale, ledit potentiel de vigilance étant réduit avec une vitesse de diminution, la condition de prise en charge utilisée correspondant au fait que le potentiel de vigilance atteint ou devient inférieur à une valeur limite et/ou au fait que l'élément de commande (12) n'est pas actionné dans un intervalle de temps prédéterminé après que la valeur limite a été atteinte ou dépassée et après qu'un signal d'information a été délivré au conducteur.

2. Procédé selon la revendication 1, **caractérisé en ce que** la vitesse de diminution est déterminée en tenant compte des données réelles décrivant l'état du conducteur quant à la conduite du véhicule, provenant d'au moins un capteur et/ou d'autres systèmes de véhicule.

3. Procédé selon la revendication 2, **caractérisé en ce que** l'on utilise comme capteur une caméra (8) fournissant des données de mesure à évaluer quant à la visibilité du conducteur sur la route et/ou à l'orientation du regard du conducteur sur la route et/ou à la position dans le siège et/ou à la position du volant de direction (6) et/ou à la position du conducteur dans le siège et/ou un capteur de position du siège (9) et/ou un capteur d'espace au niveau des pieds fournissant des données de mesure à évaluer en particulier quant à la position des pieds relativement aux pédales (7).

4. Procédé selon la revendication 2 ou 3, **caractérisé en ce que** les données prennent en compte une grandeur décrivant une situation de la circulation routière, en particulier une vitesse réelle du véhicule (1) et/ou l'état du véhicule devant, et/ou en tenant compte d'une grandeur décrivant l'utilisation d'un dispositif d'info-divertissement (15) du véhicule (1).

5. Procédé selon l'une des revendications 2 à 4, **caractérisé en ce que** la vitesse de diminution est déterminée par l'utilisation d'une logique floue.

6. Procédé selon la revendication 5, **caractérisé en ce que** à partir des données sont calculées au moins deux variables à logique floue qui sont traitées dans le cadre de l'inférence par des règles pour produire au moins une autre variable à logique floue associée à la vitesse de diminution, la vitesse de diminution étant déterminée à partir de ces variables via un traitement de logique floue.

7. Procédé selon la revendication 6, **caractérisé en ce qu'**une variable décrivant l'intervalle de temps avec le véhicule devant et/ou une variable décrivant le regard du conducteur dans une zone de visibilité intéressante et/ou une variable décrivant l'utilisation d'un dispositif d'info-divertissement (15) du véhicule (1) sont utilisées en tant que variables de logique floue.

8. Procédé l'une des revendications précédentes, **caractérisé en ce que** l'entrée d'une condition de désactivation, provenant en particulier d'au moins des données décrivant une position critique du siège provenant de capteurs de position du siège (9), conduit à mettre immédiatement le potentiel de vigilance à la valeur limite et/ou conduit à délivrer un ordre de prise en charge de la conduite.

9. Procédé l'une des revendications précédentes, **caractérisé en ce que** la valeur réelle du potentiel de vigilance est présentée au conducteur par voie optique et/ou par voie haptique et/ou par voie acoustique, en particulier au moyen d'un écran et/ou d'un affichage à tête haute et/ou des éléments de commande (12).

10. Procédé l'une des revendications précédentes, **caractérisé en ce que** l'élément de commande (12) utilise un levier, en particulier une manette latérale (13).

11. Procédé selon la revendication 10, **caractérisé en ce que** le levier est dévié sous la contrainte du potentiel de vigilance et/ou le signal d'information et/ou l'ordre de prise en charge de la conduite est transmis au moins en partie par voie haptique sur le levier, en particulier via une vibration du levier.

12. Procédé selon l'une des revendications 9 ou 10, **ca-**

**ractérisé en ce que** le potentiel de vigilance positionne le levier dans sa position initiale seulement après son déplacement complet.

13. Procédé l'une des revendications précédentes, **caractérisé en ce que**, lorsqu'après deux intervalles de temps il n'y a pas de demande de conduite transmise avec succès par le conducteur, le système d'assistance de conduite (2) est désactivé et/ou un avertisseur du véhicule (1) est activé.

14. Véhicule (1), disposant d'un système d'assistance à la conduite (2) de véhicule pour la conduite d'un véhicule de façon automatique conçu avec un appareil de commande (3) de ce système, agencé pour mettre en oeuvre le procédé selon l'une des revendications précédentes, et d'un élément de commande (12) associé au système d'assistance à la conduite (2).

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009050404
- US 20090287367 A1
- US 20050030184 A1